Europäisches Patentamt

European Patent Office

Office européen des brevets

(11) Veröffentlichungsnummer: **0 289 999**
**A1**

## (12) EUROPÄISCHE PATENTANMELDUNG

(21) Anmeldenummer: 88107125.2

(22) Anmeldetag: 04.05.88

(51) Int. Cl.⁴: **C02F 7/00 , C02F 3/24**

(30) Priorität: 04.05.87 CH 1691/87

(43) Veröffentlichungstag der Anmeldung:
09.11.88 Patentblatt 88/45

(84) Benannte Vertragsstaaten:
AT BE CH DE ES FR GB GR IT LI LU NL SE

(71) Anmelder: Hans Kessler & Partner AG
Eulachstrasse 16
CH-8408 Winterthur(CH)

(72) Erfinder: Kessler, Hans
Büelrainstrasse 45
CH-8401 Winterthur(CH)

(74) Vertreter: Breiter, Heinz
Patentanwalt H. Breiter AG Wartstrasse 4
Postfach 1163
CH-8401 Winterthur(CH)

(54) **Verfahren und Vorrichtung zur Sauerstoffanreicherung des Tiefenwassers stehender Gewässer.**

(57) Bei der Sauerstoffanreicherung des Tiefenwassers (20) stehender Gewässer (10), wie Flachseen ohne besondere Dichteschichtung, wird Wasser aus tieferen Schichten über der Oberfläche (11) des Gewässers (10) versprüht.

Das Tiefenwasser (20) wird unter Ausnützung des Prinzips kommunizierender Gefässe ohne Energieanwendung in den Bereich der Oberfläche (11) des Gewässers (10) geleitet. Von einem motorisch angetriebenen Gerät wird das Tiefenwasser (20) aufgenommen und auf mehr als einer Ebene versprüht. Das versprühte, mit Sauerstoff angereicherte Wasser (38) wird wenigstens teilweise gesammelt und ohne Beeinträchtigung der natürlichen Schichtung des Gewässers (10) in einen von der Eintrittsöffnung des Zufuhrrohrs (18) entfernt liegenden Tiefenbereich zurückgebracht.

Fig. 2

# Verfahren und Vorrichtung zur Sauerstoffanreicherung des Tiefenwassers stehender Gewässer

Die Erfindung bezieht sich auf ein Verfahren zur Sauerstoffanreicherung des Tiefenwassers stehender Gewässer, wie Flachseen ohne besondere Dichteschichtung, wobei Wasser aus tieferen Schichten über der Oberfläche des Gewässers versprüht wird. Weiter betrifft die Erfindung eine Vorrichtung zur Durchführung des Verfahrens.

In der CH-A5 654560 wird ein Verfahren und eine Vorrichtung zur Sauerstoffanreicherung stehender Gewässer beschrieben, welche die natürliche Zirkulation zwischen Tiefen-und Oberflächenwasser nachsimulieren, und diese dadurch gefördert wird. Das Wasser wird mittels einer Saugpumpe aus den tieferen Zonen durch ein Saugrohr hochgesaugt und ringsum auf die Gewässeroberfläche versprüht. Das mit Sauerstoff angereicherte Wasser bleibt vorerst an der Oberfläche und wird später durch natürliche Zirkulation aufgenommen.

Die DE-Al 3205083 beschreibt eine Belüftungseinrichtung und ein Verfahren zum Umwälzen und Belüften von Wasser, insbesondere von Seen. Ueber ein Saugrohr wird Wasser ebenfalls von unteren Schichten nach oben, zu einem rotierenden Körper gepumpt. Dort wird das Tiefenwasser im wesentlichen horizontal weggeschleudert und mit Luftsauerstoff angereichert. Nach einer Variante ist ein Wasserauffangbecken mit einem das Aufstiegsrohr umgebenden Wasserabstiegsrohr ausgebildet, durch welches das mit Sauerstoff angereicherte Wasser wieder in untere Wasserschichten zurückgeführt wird. Der Antrieb der Vorrichtung erfolgt vorzugsweise mittels Windenergie, indem ein über dem Sprühgerät angeordneter Rotor angetrieben wird.

Die Rückführung des Wasser gemäss der DE-Al 3205083 in den Tiefenbereich bewirkt, dass das mit Sauerstoff angereicher te Sprühwasser nicht vorerst an der Oberfläche des Gewässers bleibt, sondern rasch in einer bestimmten Höhe und Stelle wieder in den See abgegeben wird.

Die praktischen Erfahrungen haben gezeigt, dass die Sprühgeräte der oben beschriebenen Ausführungsformen in kleinen Gewässern gute Resultate erzeugen können, für Einsätze in grösseren Gewässern erweisen sie sich jedoch als zu wenig leistungsfähig.

Die Erfinder haben sich die Aufgabe gestellt, ein Verfahren und eine Vorrichtung der eingangs genannten Art zu schaffen, mit welchen die Herstellung der an Sauerstoff angereicherten Wassermenge vervielfacht, vorzugsweise mindestens versechsfacht wird. Die Herstellungs-und Betriebskosten sollen dabei nicht wesentlich erhöht werden.

In bezug auf das Verfahren wird die Aufgabe erfindungsgemäss dadurch gelöst, dass das Tiefenwasser unter Ausnützung des Prinzips kommunizierender Gefässe ohne Energieanwendung in den Bereich der Oberfläche geleitet, dort von einem motorisch angetriebenen Gerät aufgenommen und auf mehr als einer Ebene versprüht wird, und das versprühte, mit Sauerstoff angereicherte Wasser wenigstens teilweise gesammelt und ohne Beeinträchtigung der natürlichen Schichtung des Gewässer in einen von der Eintrittsöffnung des Zufuhrrohrs entfernt liegenden Tiefenbereich zurückgebracht wird.

Bevorzugt wird das Tiefenwasser gleichzeitig auf wenigstens vier, insbesondere wenigstens auf echs Ebenen versprüht.

Ein im Tiefenbereich sauerstoffarmes stehendes Gewässer kann sich sehr viel schneller erholen, weil mit dem erfindungsgemässen Verfahren ein hoher Wirkungsgrad erzielt wird. Die sanierende Wirkung kann auch in Gewässern erzielt werden, die mit der direkten Zufuhr von Luft oder Sauerstoff in tiefere Wasserschichten bisher vergeblich zu er reichen versucht wurde.

Das versprühte Wasser wird vorzugsweise oberhalb der Oberfläche des Gewässers gesammelt, z.B. mittels einer oder mehreren Auffangwanne/n, welche im Wirkungsbereich der Sprühvorrichtung angeordnet ist/sind. Zweckmässig werden die Wannen in an sich bekannter Bauart von Schwimmkörpern getragen, wodurch sie sich automatisch dem Wasserstand anpassen.

Das gesammelte, sauerstoffreiche Sprühwasser wird von den Auffangwannen auf eine Tiefe, die in der Praxis 1 m über dem Grund bis 2 m unterhalb der Oberfläche des Gewässers liegt, geleitet. Dies entspricht dem Tiefenbereich, aus welchem das Wasser zur Sauerstoffanreicherung angehoben wird.

Obwohl für die Zuleitung des sauerstoffarmen als auch für die Ableitung des sauerstoffreichen Wassers wird das Prinzip kommunizierender Gefässe angewendet. Dies wird mit je einem oben und unten offenen, aus der Oberfläche des Wassers hinausragenden Rohr oder Schlauch bewirkt. Wird aus dem obersten Bereich des Rohrs oder Schlauchs Wasser entfernt oder hinzugefügt, bewirkt der hydrostatische Druck einen sofortigen Ausgleich. Ohne Energieanwendung fliesst Wasser von unten nach oben bzw. von oben nach unten.

Im Falle der Zuleitung des sauerstoffarmen Wassers ist das Zufuhrrohr, aber auch ein allenfalls eingesetzter Schlauch, zweckmässig vertikal angeordnet. Aus dem obersten Teil des Zufuhrrohrs kann das Sprühgerät mit einem kurzen Saugstutzen Tiefenwasser entnehmen. Es müssen keine leistungsstarken, das Wasser aus grösseren Tiefen hebende Pumpen verwendet werden. Mit dem erwähnten Prinzip kann vielmehr eine Pumpe mit geringer Leistung eingesetzt werden.

Die unten liegende Eintrittsöffnung des Zufuhrrohrs für das sauerstoffarme Tiefenwasser sollte in optimaler Entfernung von der Ausflussöffnung des sauerstoffreichen Wassers liegen, damit einerseits immer sauerstoffarmes Wasser angesaugt wird, andrerseits aber kein übermässig langes Abflussrohr installiert werden muss. In der Praxis wird deshalb das sauerstoffreiche Wasser mittels eines Schlauchs zurückgeführt und dessen Austrittsöffnung vorzugsweise 10 bis 200 m von der Eintrittsöffnung des Zuflussrohrs entfernt angeordnet.

Das Sprühwasser wird möglichst vollständig aufgefangen. In der Praxis ist dies jedoch, insbesondere wegen Luftturbulenzen, oft nicht möglich. Je nach Ausgestaltung der Auffangwanne werden vorzugsweise mindestens 30% des Sprühwassers aufgefangen und in das Tiefenwasser zurückgeführt. Auch hier muss ein Optimum zwischen Investitionsaufwand und Wirkungsgrad gefunden werden. Das nicht rückgeführte sauerstoffreiche Wasser bleibt vorerst an der Oberfläche und wird dann durch natürliche Zirkulation, die weniger wirkungsvoll, jedoch keineswegs nutzlos ist, allmählich in das Tiefenwasser aufgenommen.

In bezug auf die Vorrichtung wird die Aufgabe erfindungsgemäss gelöst durch ein nach dem Prinzip kommunizierender Gefässe arbeitendes Zufuhrrohr zum Zuleiten des Tiefenwassers, ein in dieses Tiefenwasser im obersten Bereich des Zufuhrrohrs eintauchendes, motorisch angetriebenes Sprühgerät, welches Bauteile zur Versprühung des Tiefenwassers auf mehr als einer Ebene aufweist, und wenigstens eine Auffangwanne für das versprühte Wasser, mit Mitteln zur Rückführung des gesammelten sauerstoffreichen Wassers in einen von der Eintrittsöffnung des Zufuhrrohrs entfernten Tiefenbereich des Gewässers.

Nach einer ersten Variante umfasst das Sprühgerät im wesentlichen einen Saugstutzen, eine Ansaugpumpe, wenigstens zwei übereinander angeordnete, von einem vertikalen Druck rohr einer Druckleitung gespeiste Versprühteller und Mittel zum Antrieb der Versprühteller.

Vorzugsweise ist die Druckleitung als Ringleitung mit wenigstens zwei gleichzeitig als Antriebswelle für die Versprühteller dienenden, vertikalen Druckrohren oder als zentrales Druckrohr mit Zuleitungen zu den auf wenigstens zwei Antriebswellen angeordneten Versprühtellern, ausgebildet.

Nach einer zweiten Variante besteht das Sprühgerät im wesentlichen aus einem Saugstutzen, einer Ansaugpumpe, welche das dem Zufuhrrohr entnommene Tiefenwasser über ein Steigrohr in eine von einem Stativ getragene obere Wanne mit perforiertem oder geschlitztem Boden leitet.

Eine die Wanne zentral durchgreifende vertikale Welle mit einem Antriebsmotor umfasst unterhalb der Wanne angeordnete Sprühkörper, welche ein die Atomisierung bzw. Feinstverteilung des Tiefenwassers begünstigendes Profil haben.

Die Auslassöffnung der Auffangwanne bzw. der Auffangwannen liegt bevorzugt oberhalb der Oberfläche des Gewässers.

Die Erfindung wird anhand der in der Zeichnung dargestellten Ausführungsbeispiele näher erläutert. Die teilweise aufgeschnittenen Ansichten zeigen schematisch:

- Fig. 1 eine Sprühvorrichtung mit zwei vertikalen Druckrohren und je sieben Versprühtellern,
- Fig. 2 eine Sprühvorrichtung mit acht Versprühstäben, und
- Fig. 3 eine Variante von Fig. 1

Die Vorrichtung zur Sauerstoffanreicherung von Tiefenwasser ist im wesentlichen als in einem stehenden Gewässer 10 schwimmendes, verankertes Floss ausgebildet. Schwimmer 12 mit einem Rohrrahmen 14 stützen eine Auffangwanne 16 aus Folien, welche Wanne in das stehende Gewässer 10 eintaucht oder darüber schwimmt.

Von unten in das Auffangbecken 16 hinein ragt ein Zufuhrrohr 18, welches mit Tiefenwasser 20 gefüllt ist. Die obere Oeffnung dieses Zufuhrrohrs liegt über der Oberfläche 11 des stehenden Gewässers 10 bzw. über dem im Auffangbecken liegenden, mit Sauerstoff angereicherten Wasser 22 von gleichem Niveau. Die untere, nicht dargestellte Oeffnung des Zufuhrrohrs 18 liegt in derjenigen Schicht des stehenden Gewässers 10, welcher Tiefenwasser 20 entnommen werden soll. Bei flachen Gewässern 10 ist die untere Oeffnung des Zufuhrrohrs 18 in der Praxis etwa 1 m vom Seegrund entfernt angeordnet. Der unterste Bereich des Zufuhrrohrs 18 kann eine trichterförmige Oeffnung aufweisen.

In das Tiefenwasser 20 des Zufuhrrohrs 18 taucht ein Saugstutzen 24 einer Ansaugpumpe 26. Diese Pumpe braucht nur eine geringe Saugleistung aufzuweisen, weil sie das Tiefenwasser 20 lediglich aus dem obersten Bereich des Zufuhrrohrs 18 heben muss.

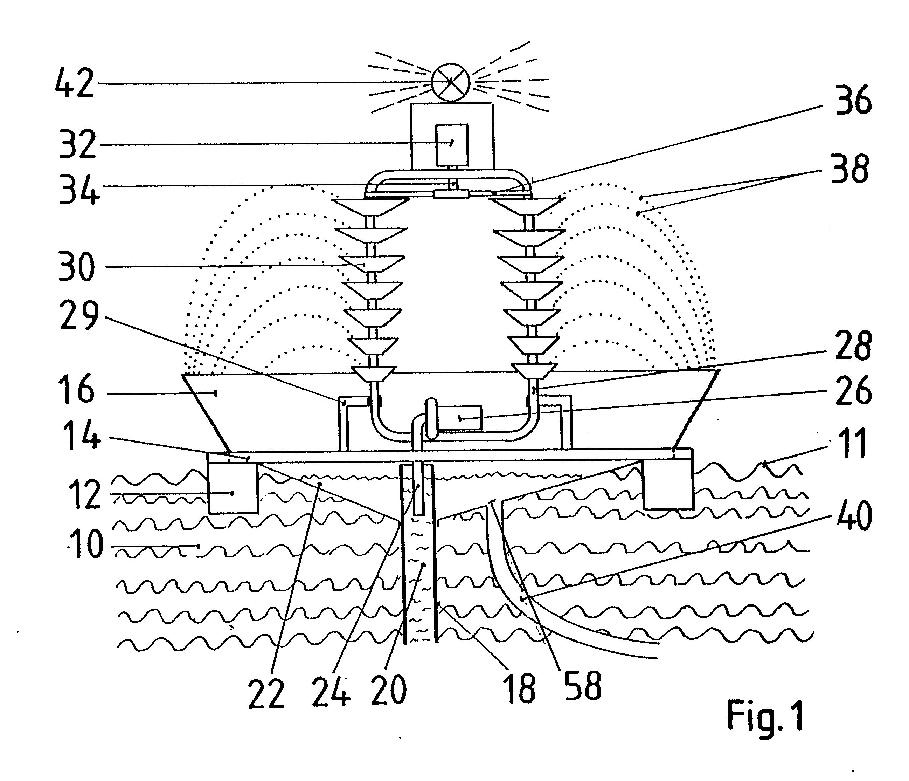

Gemäss Fig. 1 ist eine von der Ansaugpumpe 26 gespeiste Druckleitung mit zwei vertikalen Druckrohren 28 vorgesehen, die zu einem Ring geschlossen sind. An jedem der beiden drehbaren vertikalen Druckrohre 28 sind sieben übereinander angeordnete Versprühteller 30 drehbar angeordnet, wobei deren Durchmesser von unten nach oben zunimmt. Die schnell drehenden Versprühteller 30 werfen das aus der Druckleitung 28 fliessende Tiefenwasser 20 feinverteilt aus, es sinkt in Richtung der Auffangwanne 16. Der Antrieb der Versprühteller 30 erfolgt über die Druckrohre 28, welche gleichzeitig die Antriebsachsen sind. Die Welle des Antriebsmotors überträgt das Drehmoment über Ketten oder Keilriemen 36 auf die Druckrohre 28 der Versprühteller 30.

Der grösste Teil des versprühten Wassers 38 sammelt sich, nun mit Sauerstoff angereichert, in der Auffangwanne 16, falls diese genügend gross dimensioniert ist. Dieses sauerstoffreiche Wasser fliesst durch ein Abflussrohr 40, welches über eine Auslassöffnung 58 in den konischen Unterteil der Auffangwanne 16 mündet, in einen etwa 50 m vom Zufuhrrohr 18 entfernt liegenden Bereich im Tiefenwasser ab.

Aus Sicherheitsgründen ist eine Positionslampe 42 vorgesehen, welche die Lage der Vorrichtung zur Sauerstoffanreicherung markiert, insbesondere bei Nebel und/oder Dunkelheit.

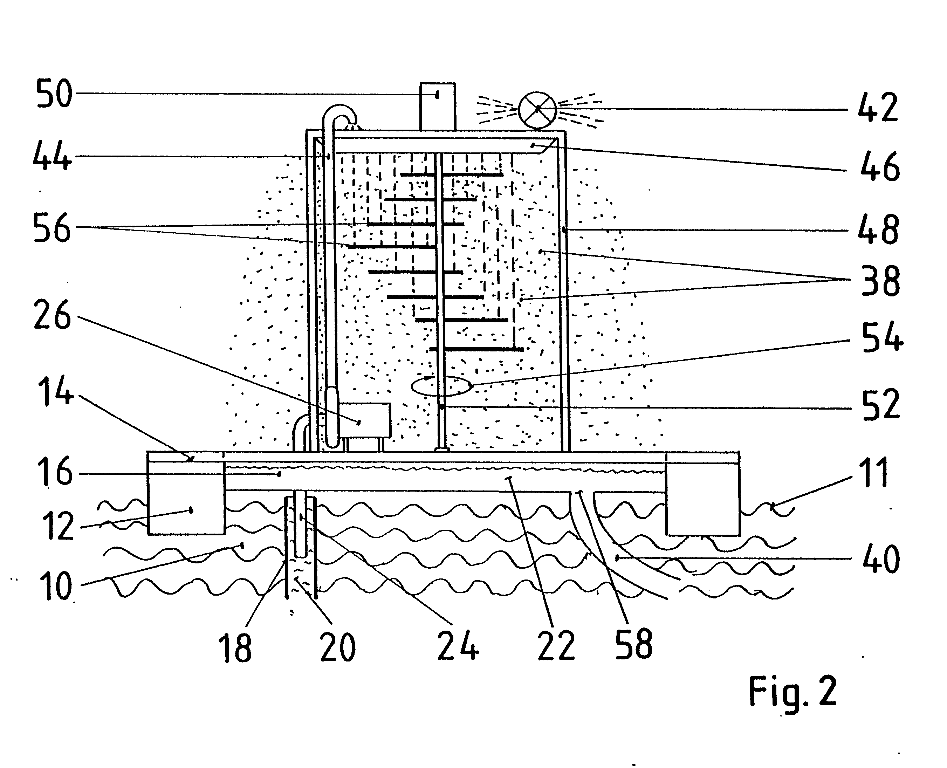

Nach Fig. 2 hebt die Ansaugpumpe 26 das Tiefenwasser 20 über ein Steigrohr 44 in eine obere Wanne 46. Diese obere Wanne 46 wird von einem Stativ 48 getragen.

Die obere Wanne 46 weist einen Loch-oder Schlitzboden auf, welcher sich vorzugsweise nur über einen Teil des Wannenbodens erstreckt. Das gehobene Tiefenwasser 20 tropft regelmässig verteilt nach unten. Ueber der oberen Wanne 46, in deren Zentrum, ist ein Antriebsmotor 50 am Stativ 48 befestigt. Der Motor bringt die darunterliegende Welle 52 auf eine hohe Drehzahl in Richtung des Pfeils 54, also im Uhrzeigersinn, oder umgekehrt.

An der Welle 52 sind Versprühkörper 56 befestigt, welche das herunterrinnende Wasser vernebeln. Die Versprühkörper 56 sind in regelmässigen Abständen an der Welle 52 befestigt, liegen im vorliegenden Fall in einer vertikalen Ebene, bilden zur Welle einen rechten Winkel und sind in bezug auf ihre Längsrichtung versetzt angeordnet. Stirnseitig befestigte Versprühkörper 56 reichen bis unter die äusserste Perforation der oberen Wanne 46.

Als Versprühkörper 56 eignen sich Stäbe, Bleche oder andere Profile; weiter werden Versprühkörper 56 mit gezackter Hinterkante oder mit hängenden oder steifen Borsten eingesetzt. In Längsrichtung können die Versprühkörper 56 gerade, gebogen, abgeknickt oder in geschwungener Linie ausgebildet sein.

Der gebildete Nebel reichert sich mit Sauerstoff an und sammelt sich in der darunterliegenden Auffangwanne 16. Diese ist oberhalb der Oberfläche 11 des stehenden Gewässers 10 angeordnet. Ebenso befindet sich die Auslassöffnung 58 des in die Wanne mündenden Abflussrohrs 40 oberhalb der Oberfläche 11.

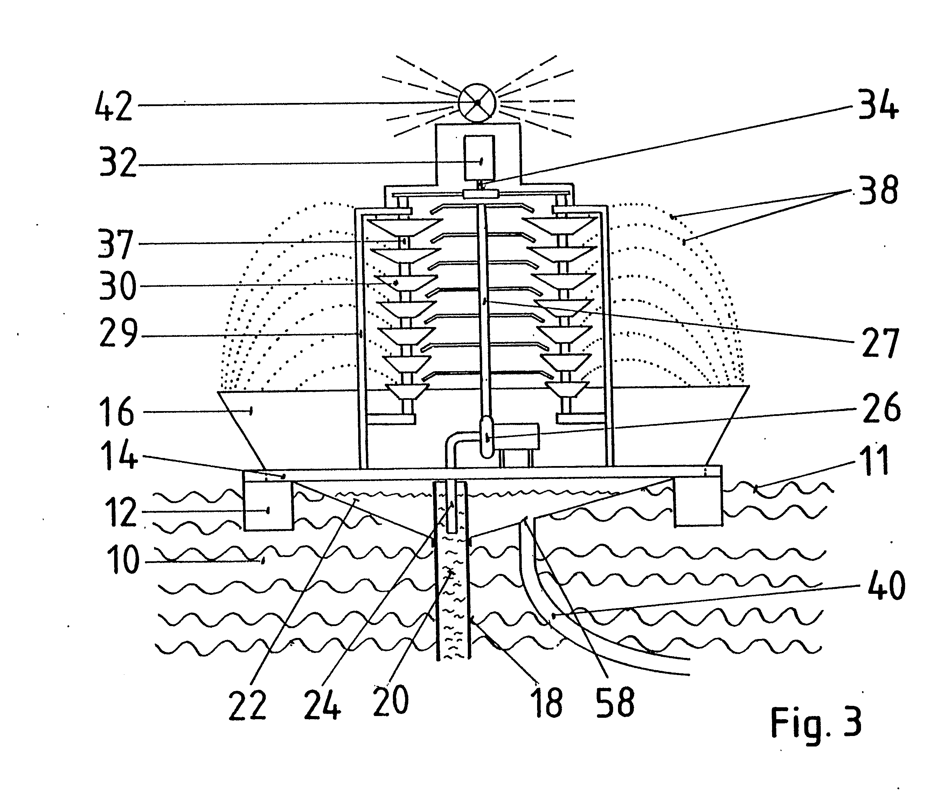

Fig. 1 und 3 unterscheiden sich bezüglich der Einspeisung des Tiefenwassers 20 in die Versprühteller 30. Das zentral angeordnete, nicht drehbare Druckrohr 27 von Fig. 3 leitet das Tiefenwasser 20 über im wesentlichen horizontale Ausflussrohre oder Ausflussrinnen in die Versprühteller 30. Die Anzahl Ausflussrohre oder Ausflussrinnen entspricht der Anzahl Sprühteller 30. Die Antriebswelle 37 der Versprühteller ist in Halterungen 29 gelagert.

Es lassen sich beliebig viele vertikale Achsen mit Versprühtellern 30 oder Wellen 52 mit Versprühkörpern 56 anordnen. Die Versprühkörper von verschiedenen Wellen 52 können in bezug auf ihre Höhe gegeneinander versetzt sein und überlappende Drehbereiche haben, falls dies die Ausbildung der Versprühkörper erlaubt.

## Ansprüche

1. Verfahren zur Sauerstoffanreicherung des Tiefenwassers (20) stehender Gewässer (10), wie Flachseen ohne besondere Dichteschichtung, wobei Wasser aus tieferen Schichten über der Oberfläche (11) des Gewässers (10) versprüht wird,
dadurch gekennzeichnet, dass
das Tiefenwasser (20) unter Ausnützung des Prinzips kommunizierender Gefässe ohne Energieanwendung in den Bereich der Oberfläche (11) des Gewässers (10) geleitet, dort von einem motorisch angetriebenen Gerät aufgenommen und auf mehr als einer Ebene versprüht wird, und das versprühte, mit Sauerstoff angereicherte Wasser (38) wenigstens teilweise gesammelt und ohne Beeinträchtigung der natürlichen Schichtung des Gewässers (10) in einen von der Eintrittsöffnung des Zufuhrrohrs (18) entfernt liegenden Tiefenbereich zurückgebracht wird.

2. Verfahren nach Anspruch 1, dadurch gekennzeichnet, dass das Tiefenwasser (20) gleichzeitig auf wenigstens vier Ebenen versprüht wird.

3. Vorrichtung zur Durchführung des Verfahrens nach Anspruch 1 oder 2,
gekennzeichnet durch
ein nach dem Prinzip kommunizierender Gefässe arbeitendes Zufuhrrohr (18) zum Zuleiten des Tiefenwassers (20), ein in dieses Tiefenwasser im obersten Bereich des Zufuhrrohrs (18) eintauchendes, motorisch angetriebenes Sprühgerät, welches Bauteile zur Versprühung des Tiefenwassers (20) auf mehr als einer Ebene aufweist, und wenigstens eine Auffangwanne (16) für das versprühte Wasser (38), mit Mitteln zur Rückführung des gesammelten, sauerstoffreichen Wassers in einen von der Eintrittsöffnung des Zufuhrrohrs (18) entfernten Tiefenbereich des Gewässers (10).

4. Vorrichtung nach Anspruch 3, dadurch gekennzeichnet, dass das Sprühgerät im wesentlichen einen Saugstutzen (24), eine Ansaugpumpe (26), wenigstens zwei übereinander angeordnete, von einem vertikalen Druckrohr (27, 28) einer Druckleitung gespeiste drehbare Versprühteller (30) und Mittel zum Antrieb der Versprühteller umfasst.

5. Vorrichtung nach Anspruch 4, dadurch gekennzeichnet, dass das zentral angeordnete Druckrohr (27) das Tiefenwasser (20) in die auf wenigstens zwei vertikalen Antriebswellen (37) übereinander angeordneten Versprühteller (30) leitende Ausflussrohre oder Ausflussrinnen aufweist, wobei jeweils mindestens zwei Versprühteller (30) übereinander angeordnet sind und die Anzahl Ausflussrohre bzw. Ausflussrinnen der Anzahl Versprühteller (30) entspricht.

6. Vorrichtung nach Anspruch 4, dadurch gekennzeichnet, dass die Druckleitung als Ringleitung mit mindestens zwei vertikalen Druckrohren (28), welche wenigstens je zwei übereinander angeordnete Versprühteller (30) speisen, ausgebildet ist, wobei die drehbar gelagerten Druckrohre (28) gleichzeitig die Antriebsachsen der Versprühteller (30) sind.

7. Vorrichtung nach Anspruch 3, dadurch gekennzeichnet, dass das Sprühgerät im wesentlichen ein Ansaugstutzen (24), eine Ansaugpumpe (26), welche das Tiefenwasser (20) über ein Steigrohr (44) in eine von einem Stativ (48) getragene obere Wanne (46) mit perforiertem oder geschlitztem Boden leitet, eine die Wanne (46) zentral durchgreifende vertikale Welle (52) mit einem Antriebsmotor (50) und unterhalb der oberen Wanne (46) angeordneten Versprühkörper (56) umfasst.

8. Vorrichtung nach Anspruch 7, dadurch gekennzeichnet, dass die Versprühkörper (56) als Stäbe, Bleche oder andere Profile ausgebildet sind.

9. Vorrichtung nach Anspruch 7 oder 8, dadurch gekennzeichnet, dass die Versprühkörper (56) eine gezackte Hinterkante haben oder eine Bürste, mit hängenden oder steifen Borsten, aufweisen.

10. Vorrichtung nach einem der Ansprüche 7 - 9, dadurch gekennzeichnet, dass die in ihrer Längsrichtung gerade, gebogen, abgeknickt oder in geschwungenet Linie ausgebildeten Versprühkörper (56) in bezug auf ihre Länge dem Abstand der Welle (52) von der äussersten Perforation der oberen Wanne (46) entsprechen.

42

32

34

36

38

30

29

16

28

26

14

11

12

10

40

22 24 20 18 58

Fig. 1

0 289 999

Fig. 2

Fig. 3

**Europäisches Patentamt**

# EUROPÄISCHER RECHERCHENBERICHT

Nummer der Anmeldung

EP 88 10 7125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 205 083 (H. BEHAM) <br> * Seite 1, Ansprüche 1-6; Seite 4, Anspruch 16; Seite 12, Zeile 26 - Seite 15 * <br> --- | 1-4 | C 02 F 7/00 <br> C 02 F 3/24 |
| Y | DE-A-1 584 898 (B. FRIEHE) <br> * Seite 5, Zeile 9 - Seite 6; Figuren * <br> --- | 1-4 | |
| A | US-A-3 086 715 (P.J. MINEAU et al.) <br> * Spalte 4, Zeilen 5-25; Figuren 1,6 * <br> --- | 1 | |
| A | DE-A-2 638 489 (LINDE) <br> * Seite 1, Anspruch 1; Figur 1 * <br> ----- | 7 | |

|  |
|---|
| **RECHERCHIERTE SACHGEBIETE (Int. Cl.4)** |
| C 02 F <br> B 01 F <br> A 01 K |

Der vorliegende Recherchenbericht wurde für alle Patentansprüche erstellt

| Recherchenort | Abschlußdatum der Recherche | Prüfer |
|---|---|---|
| DEN HAAG | 21-07-1988 | TEPLY J. |